# FASCICULE DE BREVET EUROPEEN

(11) **EP 2 258 144 B1**
(45) Date de publication et mention de la délivrance du brevet: **04.04.2018**
(21) Numéro de dépôt: 09727244.7
(22) Date de dépôt: 19.03.2009
(51) Int. Cl.: H05B 6/70

(54) **APPAREIL DE TRAITEMENT PAR RAYONNEMENT ELECTROMAGNETIQUE D'UN MILIEU REACTIF**
VORRICHTUNG ZUR BEHANDLUNG EINES REAKTIVEN MEDIUMS MIT ELEKTROMAGNETISCHER STRAHLUNG
DEVICE FOR ELECTROMAGNETIC RADIATION TREATMENT OF A REACTIVE MEDIUM

(30) Priorité: 20.03.2008 FR 0801540
(43) Date de publication de la demande: 08.12.2010
(73) Titulaire: SAIREM SOCIETE POUR L'APPLICATION INDUSTRIELLE DE LA RECHERCHE EN ELECTRONIQUE ET MICRO ONDES, 01700 Neyron (FR)
(72) Inventeur: GRANGE, André, F-69480 Lachassagne (FR); JACOMINO, Jean-Marie, F-69140 Rilleux-la-Pâpe (FR); GRANDEMENGE, Adrien, F-69370 Saint-Didier au Mont d'Or (FR)
(74) Mandataire: Chevalier, Renaud Philippe
(86) Numéro de dépôt international: PCT/FR2009/050458
(87) Numéro de publication internationale: WO 2009/122102

(56) Documents cités:
- EP-A- 1 839 741
- WO-A-01/11925
- DE-A1- 2 822 370
- US-A- 4 673 560
- US-A- 4 999 469
- US-A1- 2007 131 678

## Description

L'invention se rapporte à un appareil de traitement par rayonnement électromagnétique d'un milieu réactif comprenant un dispositif de transmission d'un rayonnement électromagnétique.

Elle se rapporte plus particulièrement à un appareil de traitement comprenant un générateur de rayonnement électromagnétique, un réacteur contenant le milieu réactif, et un dispositif de transmission du rayonnement électromagnétique généré par le générateur au milieu réactif contenu dans ledit réacteur, ledit dispositif comprenant un guide d'ondes destiné à transmettre le rayonnement électromagnétique du générateur et des moyens de couplage agencés pour permettre le transfert dans le milieu réactif de l'énergie électromagnétique transmise par le guide d'ondes.

Ces appareils de traitement sont connus notamment comme appareil de traitement thermique d'un milieu réactif, où par « traitement thermique » on entend divers traitements effectués par chauffage tels qu'évaporation, séchage, grillage, extraction de produits naturels en suspension dans un solvant transparent au rayonnement, réaction ou synthèse chimique avec chauffage par pertes diélectriques (en vue d'analyse ou de production de composés chimiques), déshydratation, cuisson, décoloration, polymérisation, réticulation, traitements par fluides supercritiques, désolidarisation, élimination de composés volatils etc. ainsi que divers traitements opérés simultanément au chauffage, tels que mélange ou broyage.

Pour de tels traitements thermiques, il est notamment connu d'utiliser des rayonnements électromagnétiques du type micro-ondes ou haute-fréquence. Le rayonnement électromagnétique micro-ondes concerne les ondes dont la fréquence est comprise entre environ 300 MHz et environ 30 GHz, préférentiellement entre 400 MHz et 10 GHz, et préférentiellement entre 915 MHz et 2.45 GHz. Le rayonnement électromagnétique haute-fréquence concerne les ondes dont la fréquence est comprise entre environ 100 KHz et environ 300 MHz, préférentiellement entre 13 MHz et 28 GHz.

De tels appareils de traitement trouvent des applications pour de nombreux types de milieu réactif, qui font intervenir un seul réactif ou un mélange de réactifs en proportions variables, à l'état solide, liquide, gazeux, avec ou sans catalyseurs, ledit milieu comprenant au moins un composant sensible au rayonnement. Le milieu réactif peut être du type solide (par exemple du type granuleux ou pulvérulent), gazeux, plasma, liquide (avec un solvant et/ou des solutés absorbant le rayonnement électromagnétique).

L'invention est particulièrement adaptée à un rayonnement électromagnétique micro-ondes, pour des raisons liées à la géométrie des guides d'ondes et aux nombreuses applications envisagées pour ce type de rayonnement.

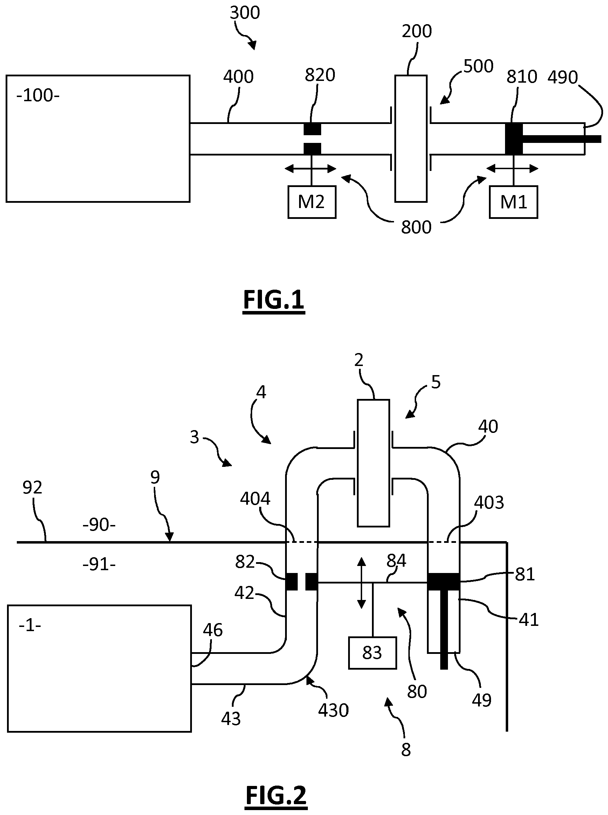

Comme illustré en figure 1, un tel appareil de traitement par rayonnement électromagnétique d'un milieu réactif comprend :
- un générateur 100 de rayonnement électromagnétique micro-ondes, comme par exemple et de façon non limitative un générateur à magnétron ou un générateur à semi-conducteurs ;
- un réacteur 200 contenant ledit milieu réactif, où le réacteur peut prendre la forme d'un réservoir ou d'une ligne continue de circulation dudit milieu réactif ; et
- un dispositif de transmission 300 du rayonnement électromagnétique généré par le générateur au milieu réactif contenu dans ledit réacteur 200.

Le dispositif de transmission 300 comprend :
- des moyens de transmission 400 du rayonnement électromagnétique disposés en sortie du générateur 100 et couplés audit réacteur 200 afin de transmettre l'énergie électromagnétique au réacteur, ces moyens de transmission étant bien entendu adaptés au rayonnement électromagnétique et pouvant par exemple être constitués d'un guide d'ondes classiquement utilisé dans le domaine des micro-ondes ;
- des moyens de couplage 500 agencés pour permettre le transfert dans le milieu réactif de l'énergie électromagnétique issue du guide d'ondes 400 ; et
- des moyens d'adaptation 800 conçus pour permettre l'optimisation du transfert de l'énergie électromagnétique au milieu réactif en fonction de certains paramètres physico-chimiques du milieu réactif, voire de leurs évolutions dans le temps, tels que les caractéristiques diélectriques, la conductivité ou la polarité des composés comme par exemple le solvant, les réactifs chimiques, les catalyseurs etc.

En fonctionnement, le générateur 100 génère un rayonnement électromagnétique à une fréquence donnée, par exemple 2450 MHz, le guide d'ondes 400 guide le rayonnement électromagnétique généré, les moyens de couplage 500, connus de l'homme du métier, assurent le transfert d'énergie dans le réacteur 200 et donc au milieu réactif, et enfin les moyens d'adaptation 800 assurent l'optimisation du transfert d'énergie audit milieu réactif, notamment en terme de puissance transmise.

Les moyens de couplage comprennent généralement un dispositif d'application de l'énergie au milieu réactif, couramment appelé applicateur d'énergie, dont le choix dépend du rayonnement utilisé (hautes-fréquences et micro-ondes), des caractéristiques dimensionnelles du milieu à traiter et de son mode de traitement.

Pour les applicateurs hautes fréquences, sont notamment connus les applicateurs suivants :
- applicateurs capacitifs formés de deux armatures de condenseur entre lesquelles est appliquée la tension haute fréquence ;
- applicateurs inductifs pour le traitement de matériaux suffisamment conducteurs, ces applicateurs sont constitués d'un solénoïde alimenté en courant haute fréquence ;
- applicateurs à barreaux alternés pour matériaux relativement plans, constitués d'électrodes tubulaires ou en barres ;
- applicateurs à anneaux ou à boucles alter pour des matériaux filiformes formant les électrodes.

L'inconvénient majeur de ces applicateurs est qu'ils sont peu ou pas adaptés pour assurer un transfert d'énergie dans une masse liquide et d'une façon homogène.

Pour les applicateurs micro-ondes, sont connus notamment les applicateurs suivants :
- applicateurs à champ localisé type cavité monomode ;
- applicateurs à champ diffus type cavité multimodale ;
- applicateurs à champ proche type guide à antennes rayonnantes.

Concernant les applicateurs à champ localisé et à champ diffus, ils nécessitent un réacteur constitué au moins en partie d'un matériau transparent aux ondes c'est-à-dire n'absorbant pas les ondes, comme par exemple du polytétrafluoréthylène ou du quartz, qui est disposé à l'intérieur de la cavité de l'applicateur. Le réacteur contenant le milieu réactif est ainsi soumis à un rayonnement électromagnétique venant de l'extérieur.

L'applicateur à champ localisé, type monomode, est formé d'une cavité monomode, de dimension prédéterminée, résonnant à la fréquence d'émission selon un rayonnement dans le sens du guide d'ondes. Cette cavité monomode permet une distribution du champ électromagnétique relativement homogène à l'intérieur de la cavité. Néanmoins, avec ce type d'applicateur monomode, la quantité de matière à traiter est limitée par les dimensions de la cavité et donc du guide d'ondes. Pour une application industrielle, il est nécessaire de prévoir un appareillage complexe et coûteux comprenant plusieurs applicateurs monomodes mis en parallèles afin d'avoir un débit suffisant, ainsi qu'un système de circulation complexe du milieu réactif. En outre, l'énergie électromagnétique transférable est limitée par le volume à l'interfaçe entre le produit à traiter et le rayonnement.

L'applicateur à champ diffus, type multimode, assure par contre une distribution non homogène du champ électromagnétique à l'intérieur de la cavité, avec la présence de points chauds. Une telle distribution limite le volume des échantillons à traiter dans les applicateurs types multimodes, et nécessite de surcroît une mise en mouvement ou une agitation de l'échantillon pour assurer une homogénéité du chauffage par micro-ondes.

Un inconvénient commun à ces deux applicateurs, type monomode ou type multimode, est qu'ils nécessitent des réacteurs en matériau adapté pour ne pas absorber les ondes. En plus d'être particulièrement complexes et coûteux à produire, ces réacteurs transparents aux ondes sont limités en taille et en forme, limitant ainsi le traitement par ondes à certaines réactions et à certains milieux réactifs, et excluant d'autres réactions où la forme et la longueur du réacteur peuvent avoir un rôle prépondérant. On remarque également que pour des réactions devant être conduites sous une pression élevée, indépendamment ou non du chauffage induit par le rayonnement électromagnétique , ces réacteurs transparents aux ondes résistent le plus souvent difficilement à des hautes pressions.

Les autres inconvénients communs à ces deux applicateurs, type monomode ou type multimode résultent de la difficulté d'obtenir un champ électrique constant dans le réacteur, et enfin du fait que la géométrie de la cavité est dépendante de la fréquence du rayonnement de sorte qu'un applicateur à champ localisé ne peut travailler qu'à une seule fréquence donnée.

Concernant les applicateurs à champ proche, ils sont connus de l'art antérieur notamment de la demande de brevet européen n° EP 0 329 338 qui divulgue un appareil de traitement par micro-ondes de poudres céramiques dans un environnement sous haute pression, où l'applicateur à champ proche est réalisé sous la forme d'une antenne rayonnante. Cet appareil comporte un réacteur formant une cavité de résonnance sous haute-pression, à l'intérieur de laquelle le rayonnement micro-ondes est introduit par une antenne rectiligne qui s'étend en partie dans la cavité.

La demande de brevet FR 08/01541 déposée par la demanderesse décrit également un applicateur du type à champ proche qui s'étend au moins en partie à l'intérieur du réacteur, le réacteur formant une cavité de résonnance à l'intérieur de laquelle le rayonnement électromagnétique est introduit par l'applicateur. Dans ce document, l'applicateur comprend au moins une ligne de transmissions à pertes présentant une interface de transfert de l'énergie électromagnétique vers le milieu réactif.

Les applicateur du type à champ proche résolvent en partie les inconvénients des applicateurs de type monomode ou multimode, notamment parce qu'ils permettent de transmettre le rayonnement directement à l'intérieur d'un réacteur, évitant ainsi d'employer un réacteur transparent aux ondes avec toutes les contraintes mentionnées ci-dessus.

Les moyens d'adaptation 800 comprennent de façon connue :
- un piston de court-circuit 810 comprenant une plaque métallique, en cuivre ou en aluminium par exemple, placée perpendiculairement à l'axe du guide d'ondes 400, ledit piston de court-circuit 810 est positionné à l'extrémité 490 du guide d'ondes 400 opposée au générateur 100, et donc en aval du réacteur 200, afin d'imposer une condition aux limites pour qu'une onde stationnaire soit présente dans le guide d'ondes 400 ;
- un iris de couplage 820 variable, disposé dans le guide d'ondes 400 entre le générateur 100 et le piston de court-circuit 810, et plus particulièrement en amont du réacteur 200.

De manière connue, le piston de court-circuit 810 et l'iris de couplage 820 sont tous les deux mobiles en translation à l'intérieur du guide d'ondes 400, afin d'obtenir une cavité résonante de longueur ajustable dans le guide d'ondes 400, et ainsi d'adapter et optimiser la transmission de l'énergie électromagnétique au milieu réactif. En outre, le piston de court-circuit 810 et l'iris de couplage 820 sont disposés par rapport au réacteur 200 afin de permettre un centrage de l'onde stationnaire sur le réacteur 200, c'est-à-dire le positionnement d'un ventre de l'onde stationnaire, correspondant à une amplitude maximale, au niveau du réacteur 200.

Ainsi qu'illustré en figure 1, les appareils de traitement de l'état de l'art sont constitués d'éléments alignés les uns à la suite des autres, c'est-à-dire que le générateur d'ondes 100, l'iris de couplage 820, le réacteur chimique 200, les moyens de couplage 500 et le piston de court-circuit 810 sont situés dans le même alignement, le long d'un guide d'ondes 400 linéaire. Dans une telle configuration, le dispositif de transmission 300 est dit en ligne, avec un guide d'ondes 400 linéaire et des moyens d'adaptation 800 alignés : l'iris de couplage 820 et le piston de court-circuit 810 sont disposés de part et d'autre des moyens de couplage 500 au dit réacteur 2.

Une telle disposition en ligne présente certains inconvénients, notamment pour implanter les moyens d'entraînement du piston de court-circuit 810 et de l'iris de couplage 820 le long du guide d'ondes 400. En effet, cette disposition en ligne impose d'utiliser deux moteurs d'asservissement distincts, respectivement un premier M1 et un deuxième M2 moteurs, pour entraîner en translation respectivement le piston de court-circuit 810 et l'iris de couplage 820 ; ces deux moteurs M1, M2 étant synchronisés au moyen d'un dispositif de commande (non illustré) des moteurs M1, M2. L'emploi de deux moteurs M1, M2 augmente ainsi le coût d'un tel dispositif de transmission, à cause des deux moteurs M1, M2 et du dispositif de commande pour synchroniser ces moteurs. En outre, ces moteurs augmentent l'encombrement autour du guide d'ondes, et peuvent de surcroît limiter l'accès au réacteur 200 ou aux moyens de couplage 500, ce qui est particulièrement rédhibitoire avec un réacteur qui fonctionne en continu. Ces moteurs peuvent ainsi exercer une gêne pour les opérateurs qui travaillent sur l'appareil, notamment pour des opérateurs qui souhaitent accéder au réacteur pour le remplacer, introduire des produits ou extraire des produits à des fins d'analyses.

L'utilisation d'un seul moteur n'est pas envisageable pour de tels dispositifs de transmission en ligne. En effet, cela nécessiterait l'emploi de moyens mécaniques de couplage en translation entre ledit moteur unique et les deux organes mobiles des moyens d'adaptation 800 (piston de court-circuit 810 et iris de couplage 820), lesdits moyens mécaniques de couplage en translation prenant par exemple la forme de biellettes qui circuleraient le long du guide d'ondes 400 de part et d'autre du réacteur 200. De tels moyens de couplage en translation sont bien entendu inacceptables pour un tel dispositif car ils constituent des pièces externes au guide d'ondes, circulant le long de ce guide d'ondes, et qui peuvent gêner les opérateurs travaillant le long du guide d'ondes, et plus particulièrement sur le réacteur 200. En outre, le piston de court-circuit 810 et l'iris de couplage 820 peuvent être très espacés, parfois de plusieurs mètres, de sorte que les moyens de couplage doivent s'étendre sur une longue distance, ce qui peut nuire à la précision du couplage entre le piston de court-circuit 810 et l'iris de couplage 820.

Un autre inconvénient de ces dispositifs de transmission en ligne est que pour répondre aux normes de sécurité, en vigueur notamment dans des laboratoires de chimie, il est connu de prévoir une longue ligne de transmission afin d'éloigner le générateur d'ondes 100 du réacteur 200, et ainsi de l'isoler à une certaine distance, avec interposition éventuelle d'une paroi en béton. Cette séparation ou éloignement du générateur 100 a pour but de se prémunir de tout risque d'incendie ou d'explosion, en particulier quand le réacteur 200 contient des solvants ou autre matériau volatiles et susceptibles de s'enflammer voire de provoquer une explosion lorsqu'ils sont en contact avec une étincelle générée au niveau du générateur 100, et plus particulièrement au niveau de l'alimentation du générateur. Par exemple, on note qu'un magnétron nécessite une alimentation en haute tension, de l'ordre de 12 à 15 kV. Pour éviter que ces phénomènes de flashs électriques ne se produisent dans les guides d'ondes, il est également connu de prévoir un inertage des guides d'ondes en les remplissant avec un gaz neutre comme l'azote.

En outre, il est à noter qu'un tel éloignement est adapté pour éviter que le générateur et son alimentation ne soient soumis à des agressions chimiques par les produits contenus dans le réacteur 200, notamment lors de leur introduction dans le réacteur 200.

Cependant, un tel éloignement a pour conséquence que le dispositif de transmission, de longueur adaptée, est particulièrement coûteux et encombrant car nécessitant une grande longueur à l'intérieur de la pièce qui accueille ce dernier, voire nécessitant deux pièces adjacentes. Cet encombrement linéaire peut également causer une gêne pour un opérateur travaillant sur cet appareil car il peut être difficile de contourner l'appareil pour effectuer des réglages sur ses divers éléments.

L'état de la technique peut également être illustré par l'enseignement des documents EP 183 97 41 A, DE 28 22370 A1, WO 01/11925 A et US 2007/131678. Le document DE 28 22 370 A1 décrit un appareil de traitement par micro-ondes comprenant un guide d'ondes transmettant le rayonnement micro-ondes d'un générateur à des gouttelettes de matériau qui sont introduites directement dans le guide d'ondes au moyen d'un distributeur de guouttelettes, où le guide d'ondes comporte un tronçon recourbé en forme générale de « U ». Les documents WO 01/11925 A et US 2007/131678 décrivent des appareils de traitement comprenant un dispositif de transmission d'un rayonnement électromagnétique comprenant un guide d'ondes transmettant le rayonnement d'un générateur à un milieu réactif circulant sur un chemin de convoyage s'étendant directement à l'intérieur du guide d'ondes, où le guide d'ondes comporte un tronçon recourbé en forme générale de « U ». Les appareils décrits dans ces trois documents sont du type à applicateur à champ localisé, type monomode, où l'intérieur du guide d'ondes forme la cavité monomode avec tous les inconvénients mentionnés ci-dessus.

La présente invention a notamment pour but de résoudre tout ou partie de ces inconvénients mentionnés ci-dessus, et consiste pour cela en un appareil de traitement par rayonnement électromagnétique d'un milieu réactif comprenant un générateur de rayonnement électromagnétique, un réacteur contenant ledit milieu réactif, et un dispositif de transmission du rayonnement électromagnétique généré par le générateur au milieu réactif contenu dans ledit réacteur, ledit dispositif comprenant un guide d'ondes destiné à transmettre le rayonnement électromagnétique du générateur et des moyens de couplage agencés pour permettre le transfert dans le milieu réactif de l'énergie électromagnétique transmise par le guide d'ondes, où le guide d'ondes présente une configuration en boucle de retour, caractérisé en ce que le guide d'ondes comporte un tronçon recourbé en forme générale de « U » et formant une boucle de retour dudit guide d'ondes, et le guide d'ondes comporte un premier et un deuxième tronçons rectilignes en regard l'un de l'autre et respectivement connectés à une première et à une deuxième extrémités dudit tronçon recourbé, et en ce qu'il comprend une paroi de séparation permettant d'isoler le générateur du réacteur, ledit réacteur étant couplé au tronçon recourbé du guide d'ondes et ledit tronçon recourbé s'étendant au moins partiellement d'un côté de la paroi de séparation opposé audit générateur, où le guide d'ondes traverse la paroi de séparation deux fois de sorte que le tronçon recourbé est disposé du côté du réacteur opposé audit générateur et les tronçons rectilignes sont situés du côté du générateur opposé audit réacteur. Ainsi, le guide d'ondes présente une conformation plus compacte, et non plus une conformation purement linéaire. Cette conformation permet donc de fournir un appareil de traitement thermique plus compact, nécessitant moins d'espace dans une pièce, et dont la manipulation est plus aisée.

Avec une telle conformation, comme décrit ci-dessous, il est également possible d'implanter des organes d'adaptation mobiles, du type iris de couplage variable et piston de court-circuit, sur chaque branche de ladite boucle de retour, permettant ainsi de les positionner l'un en face de l'autre spatialement sans interposition physique du réacteur.

Une telle conformation est en outre particulièrement adaptée pour isoler le générateur du réacteur sans pour autant nécessiter un grand espacement entre ces deux éléments, et ainsi répondre aux normes de sécurité contre les risques d'incendie et d'explosion.

Un tel appareil est donc particulièrement compact et il est ainsi envisageable, dans une même pièce, d'aligner plusieurs appareils.

Dans un laboratoire de chimie, par exemple d'analyses chimiques, les utilisateurs de l'appareil de traitement peuvent manipuler des produits volatils susceptibles de s'enflammer voire d'exploser. Une telle paroi de séparation est adaptée pour éviter ce risque en isolant le réacteur des appareils électriques comme le générateur et son alimentation, sans pour autant que l'appareil complet n'occupe un grand espace.

Ainsi, l'invention permet qu'un utilisateur puisse manipuler le réacteur, notamment pour le remplacer et introduire ou prélever des produits chimiques, tout en étant protéger efficacement de tout risque d'incendie et/ou d'explosion.

En outre, un tel utilisateur ne s'occupe pas de la partie électrique du dispositif, c'est-à-dire du générateur et de son alimentation électrique, et souhaite surtout accéder facilement au réacteur. Avec une configuration classique en ligne, l'utilisateur doit parfois passer à proximité du dispositif de transmission de l'énergie électromagnétique, avec risque de heurt, de ce dispositif et de ses composants. L'invention permet donc de résoudre ce problème de facilité d'accès au réacteur, sans risquer de perturber la partie électrique, avec une séparation marquée entre la partie électrique et le réacteur.

Il est bien entendu que le réacteur est couplé au tronçon recourbé du guide d'ondes via les moyens de couplage.

Ainsi, le guide d'ondes, après avoir traversé une première fois la paroi de séparation pour que l'on puisse le coupler au réacteur, peut repasser de l'autre côté de la paroi, du fait de sa configuration en boucle de retour, et donc présenter une partie du même côté que le générateur, occupant ainsi un espace plus compact.

Cette configuration permet ainsi d'isoler du réacteur à la fois des éléments situés en début du guide d'ondes, en amont du réacteur, et des éléments situés en fin du guide d'ondes, en aval du réacteur, comme cela est décrit ci-dessous.

Selon une caractéristique, les moyens de couplage comprennent un dispositif d'application de l'énergie au milieu réactif, et ce dispositif d'application est préférentiellement un applicateur du type à champ proche qui s'étend au moins en partie à l'intérieur du réacteur, ledit réacteur formant une cavité de résonnance à l'intérieur de laquelle le rayonnement électromagnétique est introduit par l'applicateur.

Ainsi, toute la partie couplage/application est disposée du côté de la paroi de séparation opposé au générateur, permettant des manipulations aisées sur les moyens de couplage, sur le dispositif d'application qui permet notamment de plonger directement dans le réacteur afin de transmettre le rayonnement électromagnétique au milieu réactif.

Dans une réalisation particulière, l'applicateur comprend au moins une ligne de transmissions à pertes présentant une interface de transfert de l'énergie électromagnétique vers le milieu réactif.

Cet applicateur avec ligne de transmissions à pertes présente de nombreux avantages comme décrit dans la demande de brevet français n° FR 08/01541 à laquelle on pourra utilement s'y référer pour de plus amples détails. Le guide d'ondes comporte un premier et un deuxième tronçons rectilignes en regard l'un de l'autre et respectivement connectés à une première et à une deuxième extrémités dudit tronçon recourbé.

Ainsi, les tronçons rectilignes peuvent être sensiblement parallèles ou inclinées l'un par rapport à l'autre, l'essentiel étant qu'ils soient en regard l'un de l'autre, afin notamment de pouvoir interposer entre ces tronçons des moyens d'entraînement d'organes mobiles d'adaptation, ainsi que décrit ultérieurement. Il est entendu par là que, les tronçons rectilignes s'étendant chacun selon une direction principale et étant chacun délimités par au moins une paroi dite rectiligne qui s'étend selon la direction principale correspondante, la paroi rectiligne de l'un des tronçons rectilignes est en regard de la paroi rectiligne de l'autre des tronçons rectilignes.

Ainsi, la partie de guide d'ondes en aval du réacteur, au niveau de laquelle est généralement montée mobile un piston de court-circuit, se situe en regard de la partie de guide d'ondes en amont du réacteur, permettant d'envisager des couplages mécaniques simples et peu gênants entre ces parties qui étaient jusque là impossibles dans le cas d'une configuration purement linéaire, où ces deux parties de guides d'ondes étaient alignées avec interposition physique du réacteur.

Avantageusement, les tronçons rectilignes sont parallèles, c'est-à-dire que les directions principales de ces tronçons sont parallèles, pour notamment faciliter le couplage avec des pièces simples et peu coûteuses.

Selon un mode de réalisation, le dispositif de transmission comprend des moyens d'adaptation conçus pour assurer l'adaptation du rayonnement électromagnétique audit milieu réactif, lesdits moyens d'adaptation comprenant deux organes mobiles d'adaptation, classiquement un iris de couplage variable et un piston de court-circuit, disposés dans le guide d'onde de part et d'autre dudit tronçon recourbé.

Ainsi, cette configuration particulière (c'est-à-dire avec une boucle de retour) du guide d'ondes permet de disposer en vis-à-vis les deux organes mobiles d'adaptation, et non plus de façon alignée comme dans le cas d'une configuration purement linéaire.

Ainsi, un premier organe mobile d'adaptation, tel qu'un piston de court-circuit, peut être mobile en translation dans le premier tronçon rectiligne, et un deuxième organe mobile d'adaptation, tel qu'un iris de couplage variable, peut être mobile en translation dans le deuxième tronçon rectiligne.

Les tronçons étant parallèles et en vis-à-vis, les deux organes mobiles d'adaptation peuvent être déplacés en synchronisation par des moyens simples, avec un seul moteur et sans dispositif complexe de synchronisation.

Selon une caractéristique, les moyens d'adaptation comportent des moyens d'entraînement en translation des deux organes mobiles, lesdits moyens d'entraînement étant couplés directement aux deux organes mobile d'adaptation afin de les faire translater dans le guide d'ondes.

Avantageusement, les moyens d'entraînement comprennent un moteur et une pièce de couplage reliant mécaniquement les deux organes mobile d'adaptation, ladite pièce de couplage étant déplaçable en translation par ledit moteur.

De tels moyens d'entraînement ne sont possibles qu'avec un tronçon recourbé formant une boucle de retour selon l'invention, il suffit pour cela de disposer la pièce de couplage et éventuellement le moteur entre les deux tronçons rectilignes, sans nuire à l'encombrement autour du réacteur et donc sans gêner un opérateur qui n'intervient que sur le réacteur.

Dans une réalisation particulière, le deuxième tronçon rectiligne est connecté à un troisième tronçon rectiligne incliné par rapport audit deuxième tronçon et destinée à être connecté audit générateur, de sorte que le guide d'ondes comprend successivement, en sortie du générateur, le troisième tronçon rectiligne, le deuxième tronçon rectiligne, le tronçon recourbé et le premier tronçon rectiligne.

Pour améliorer la compacité du dispositif de transmission, et donc de l'appareil,, il est avantageux que les deuxième et troisième tronçons rectilignes s'étendent dans un premier plan, et que le tronçon recourbé et le premier tronçon rectiligne s'étendent dans un deuxième plan incliné par rapport audit premier plan selon un angle non nul, notamment un angle de sensiblement 90°.

Ainsi, le dispositif de transmission présente des dimensions équilibrées dans la largeur, la longueur et la hauteur, et non plus principalement dans une seule direction, permettant ainsi de gagner en compacité et d'adapter les dimensions aux contraintes de l'espace dans lequel ledit dispositif sera implanté.

Conformément à d'autres caractéristiques avantageuses de l'invention :
- les deux organes mobiles d'adaptation sont disposés du côté de la paroi de séparation opposé audit réacteur;
- les moyens d'entraînement en translation des deux organes mobiles d'adaptation sont disposés du côté de la paroi de séparation opposé audit réacteur.

Selon un mode de réalisation particulier, l'appareil comprend un compartiment à l'intérieur duquel est au moins disposé ledit générateur, ledit compartiment comportant ladite paroi de séparation.

Selon une caractéristique, le compartiment est inerté par remplissage d'un gaz neutre, comme par exemple de l'argon, du dioxyde de carbone ou de l'azote, et ensuite isolé de façon étanche pour éviter les fuites de gaz neutre. On entend par inertage la technique qui consiste à remplacer une atmosphère, par exemple explosive, par un gaz ou un mélange gazeux incombustible et non comburant.

Cette technique d'inertage peut également être employée pour la mise sous atmosphère de tout ou partie du guide d'ondes et/ou des moyens de couplage et/ou du réacteur dans le cas du traitement d'un milieu réactif comprenant des substances inflammables, explosibles ou susceptible de produire en cours de traitement de telles substances. Pour l'inertage du guide d'ondes, on peut positionner des fenêtres dans le guide d'ondes ; lesdites fenêtres étant constituées d'un matériau isolant et transparent aux ondes, comme par exemple le quartz.

Selon une autre caractéristique, le compartiment comprend un blindage, notamment sur la paroi de séparation, conçu pour protéger les personnes et/ou instruments extérieurs audit compartiment de tout risque d'explosion et/ou d'incendie se produisant à l'intérieur dudit compartiment.

Dans une réalisation particulière, l'appareil comprend au moins des moyens de contrôle et/ou de commande de tout ou partie des composants dudit appareil.

Les moyens de contrôle et/ou de commande peuvent être adaptés pour contrôler et/ou commander les moyens de couplage.

Ainsi, l'appareil de traitement se présente sous la forme d'une boîte d'où dépasse la partie du guide d'ondes destinée à accueillir le réacteur, en l'occurrence le tronçon recourbé, de sorte qu'un utilisateur peut travailler facilement et en sécurité sur le réacteur sans être gêné par le générateur, sans agir malencontreusement sur le générateur, ou tout simplement sans voir le générateur. Ainsi, l'utilisateur ne distingue de l'appareil, en plus de la partie du guide d'ondes dépassant du compartiment, que ce compartiment et les moyens de contrôle et/ou commande (sous la forme d'un écran ou d'un tableau) des composants de l'appareil de traitement, qui sont disposés en majorité à l'intérieur du compartiment.

Un tel aspect de l'invention est particulièrement avantageux, car le fabricant de l'appareil peut livrer à un laboratoire un ou plusieurs appareils sous une forme de compartiment compact et modulaire, pouvant être alignés les uns à la suite des autres, sans avoir à transporter les éléments séparément pour ensuite les monter dans le laboratoire. Une telle conception de l'appareil de chauffage permet ainsi, lors de son installation dans un laboratoire, de se dédouaner de certaines étapes complexes.

En outre, et comme décrit ci-dessus, un utilisateur peut simplement commander l'adaptation du rayonnement électromagnétique en commandant le déplacement synchrone des organes mobiles d'adaptation ; lesdits organes mobiles d'adaptation étant disposés à l'intérieur du compartiment avec leurs moyens d'entraînement, de sorte que l'utilisateur ni ne voit leurs fonctionnements, ni ne risque de les gêner.

D'autres caractéristiques et avantages de la présente invention apparaîtront à la lecture de la description détaillée ci-après, d'un exemple de mise en oeuvre non limitatif, faite en référence aux figures annexées dans lesquelles :
- la figure 1 est une vue schématique de face d'un appareil de traitement par rayonnement électromagnétique du type connu ;
- la figure 2 est une vue schématique de face d'un appareil de traitement par rayonnement électromagnétique selon l'invention ;
- la figure 3 est une vue en perspective d'un appareil de traitement par rayonnement électromagnétique selon l'invention
- la figure 4 est une vue en perspective d'un dispositif de transmission selon l'invention équipant l'appareil de la figure 2 ;
- la figure 5 est une vue en perspective d'un tronçon recourbé de guide d'ondes du dispositif de la figure 4, ledit tronçon étant couplé à un réacteur ;
- la figure 6 est une vue en perspective du dispositif de transmission de la figure 4 illustrant le tronçon recourbé et les deux tronçons rectilignes à l'intérieur de chacun desquels est monté mobile un organe mobile d'adaptation, lesdits tronçons rectilignes étant représentées avec des parois transparentes afin de montrer lesdits organes mobiles d'adaptation ;
- la figure 7 est une vue en coupe longitudinale partielle d'un réacteur et d'un guide d'ondes illustrant plus particulièrement le couplage entre un dispositif d'application et le guide d'ondes.

Un appareil de traitement par rayonnement électromagnétique d'un milieu réactif selon l'invention comprend :
- un générateur 1 de rayonnement ou ondes électromagnétiques, avantageusement un générateur de micro-ondes ;
- un réacteur 2 contenant ledit milieu réactif ; et
- un dispositif de transmission 3 du rayonnement électromagnétique généré par le générateur au milieu réactif contenu dans ledit réacteur 2.

Le dispositif de transmission 3 comprend :
- un guide d'ondes 4 disposé en sortie du générateur 1 et couplé audit réacteur 2 afin de transmettre l'énergie électromagnétique au milieu réactif ;
- des moyens de couplage 5 agencés pour permettre le transfert dans le milieu réactif de l'énergie électromagnétique générée et transmise par le guide d'ondes 4 ; et
- des moyens d'adaptation 8 conçus pour assurer l'adaptation de l'énergie électromagnétique au milieu réactif et permettre l'optimisation du transfert d'énergie en fonction du milieu.

Les moyens d'adaptation 8 comprennent :
- un premier organe mobile d'adaptation 81 constitué d'un piston de court-circuit comprenant une plaque métallique, en cuivre ou en aluminium par exemple, placée perpendiculairement à la direction de propagation des ondes, ledit piston de court-circuit 81 étant positionné à l'extrémité libre 49 du guide d'ondes 4 opposée au générateur 1, et donc en aval du réacteur 2 ;
- un deuxième organe mobile d'adaptation 82 constitué d'un iris de couplage variable, disposé dans le guide d'ondes 4 entre le générateur 1 et le piston de court-circuit 81, et plus particulièrement en amont du réacteur 2.

Le réacteur 2 contient généralement un mélange réactif qui est chauffé par pertes diélectriques, notamment dans le but de réaliser des réactions chimiques ou physico-chimiques de produits afin d'effectuer des analyses, des synthèses, des extractions etc. En outre, la longueur du réacteur 2, de forme générale tubulaire, est ajustée en fonction de l'énergie à transmettre et des propriétés diélectriques du produit, ceci pour limiter le champ diélectrique à une valeur inférieure à la tension de claquage. Ce réacteur 2 peut être muni d'une isolation thermique afin de limiter les pertes thermiques. Ce réacteur chimique peut également être muni d'une ou plusieurs entrées 20 et sorties 21 permettant d'injecter différents réactifs et/ou produits et de prélever différente fraction du milieu réactionnel. Le réacteur 2 peut également comprendre un système de refroidissement par circulation d'un liquide de refroidissement, afin de contrôler la température du milieu réactif.

Le réacteur 2 s'étend selon une direction perpendiculaire ou bien parallèle au sens de propagation des ondes. Dans le mode de réalisation illustré aux figures 2, 3 et 5, le réacteur 2 s'étend transversalement par rapport au guide d'ondes 4, de sorte à être perpendiculaire au sens de propagation des ondes.

Le guide d'ondes 4, par exemple de section rectangulaire, comprend une succession de tronçons de même section entre son extrémité libre 49 et son extrémité 46 connecté au générateur 1, en l'occurrence :
- un premier tronçon rectiligne 41 dans lequel est monté mobile le piston de court-circuit 81 ;
- un tronçon recourbé 40 sur lequel est couplé le réacteur 2, ledit tronçon recourbé 40 étant en forme générale de « U » et formant une boucle de retour à 180° du guide d'ondes 4 ;
- un deuxième tronçon rectiligne 42 dans lequel est monté l'iris de couplage variable 82 ; et enfin
- un troisième tronçon rectiligne 43 à angle droit par rapport au deuxième tronçon rectiligne 42 et couplé à la sortie du générateur 1, et sur lequel peut être monté un isolateur 11 destiné à protéger le générateur 1 d'un retour d'ondes.

On note que le réacteur 2, et donc les moyens de couplage 5, sont disposés à équidistance de l'iris de couplage variable 82 et du piston de court-circuit 81, pour des raisons de symétrie. Ainsi, le réacteur 2 est couplé au sommet du tronçon recourbé 40 en « U » et les deux organes mobiles d'adaptation 81, 82 sont à équidistance de ce sommet. Dans cette configuration, le piston de court-circuit 81 et l'iris de couplage 82 sont disposés par rapport au réacteur 2 afin de permettre un centrage de l'onde stationnaire sur le réacteur 2, c'est-à-dire le positionnement d'un ventre de l'onde stationnaire, correspondant à une amplitude maximale, au niveau du réacteur 2.

Les ondes sont guidées successivement, en sortie du générateur 1, selon la direction Z dans le troisième tronçon rectiligne 43, selon la direction X dans le deuxième tronçon rectiligne 42 et enfin selon la direction X dans le premier tronçon rectiligne, mais dans un sens opposé au sens de propagation dans le deuxième tronçon rectiligne 42 après le passage dans le tronçon recourbé 40 formant justement la boucle de retour des ondes.

Selon un mode particulier de réalisation de l'invention et pour des raisons de facilité de fabrication, ces tronçons 40 à 43 sont des pièces distinctes qui sont fixées solidairement entre elles, les unes à la suite des autres. Pour assujettir les tronçons 40 à 43 entre eux, on a prévu dans ce mode de réalisation de pourvoir chacun d'eux d'une bride 45 ; ces brides 45 étant destinées par exemple à être boulonnées l'une à l'autre. En outre, pour assurer la connexion entre le deuxième 42 et le troisième 43 tronçons rectilignes, il est prévu d'interposer entre ces deux tronçons 42, 43 un tronçon courbé 430 à angle droit, avantageusement en forme d'arc de cercle.

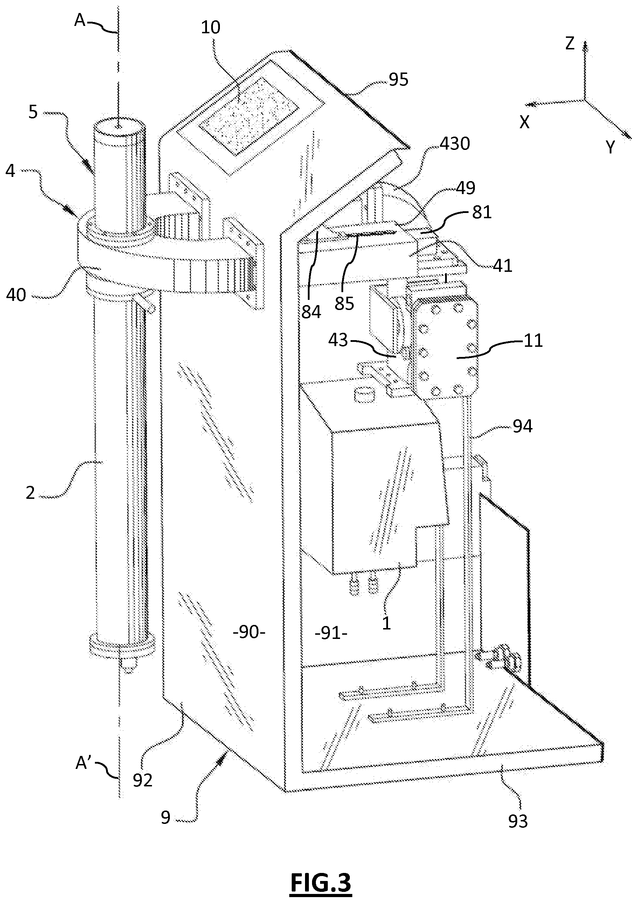

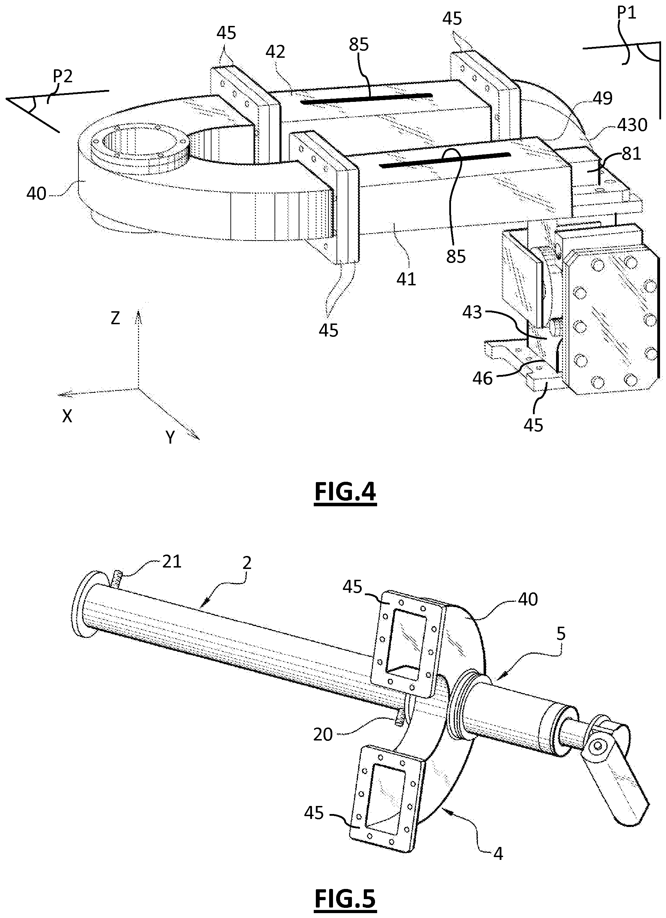

Comme illustré en figure 4, le deuxième tronçon rectiligne 42 et le troisième tronçon rectiligne 43 s'étendent dans un premier plan P1, parallèle au plan (XZ) du repère (XYZ) illustré aux figures 3 et 4. En outre, le tronçon recourbé 40 et le premier tronçon rectiligne 41 s'étendent dans un deuxième plan P2 parallèle au plan (XY) et donc perpendiculaire audit premier plan P1. On remarque également que le tronçon recourbé 40, le premier tronçon rectiligne 41 et le deuxième tronçon rectiligne 42 s'étendent tous les trois dans le même plan P2,

Ainsi qu'illustré en figure 3, le réacteur 2 s'étend selon une direction principale AA' parallèle à l'axe Z et donc perpendiculaire au plan P2, de sorte que le réacteur 2 ne s'étend pas entre le premier tronçon rectiligne 41 et le deuxième tronçon rectiligne 42.

Comme illustré en figure 2 de façon schématique, les moyens d'adaptation 8 comportent des moyens d'entraînement 80 en translation du piston de court-circuit 81 et de l'iris de couplage variable 82, lesdits moyens d'entraînement 80 étant couplés directement à ces deux organes mobile d'adaptation 81, 82 afin de les faire translater dans le guide d'ondes 4. Le couplage direct entre le piston de court-circuit 81 et l'iris de couplage variable 82 est réalisé au moyen d'une pièce de couplage 84 reliant mécaniquement ces deux organes mobiles 81, 82, cette pièce de couplage 84 étant déplaçable en translation par un moteur 83 auquel elle est directement reliée.

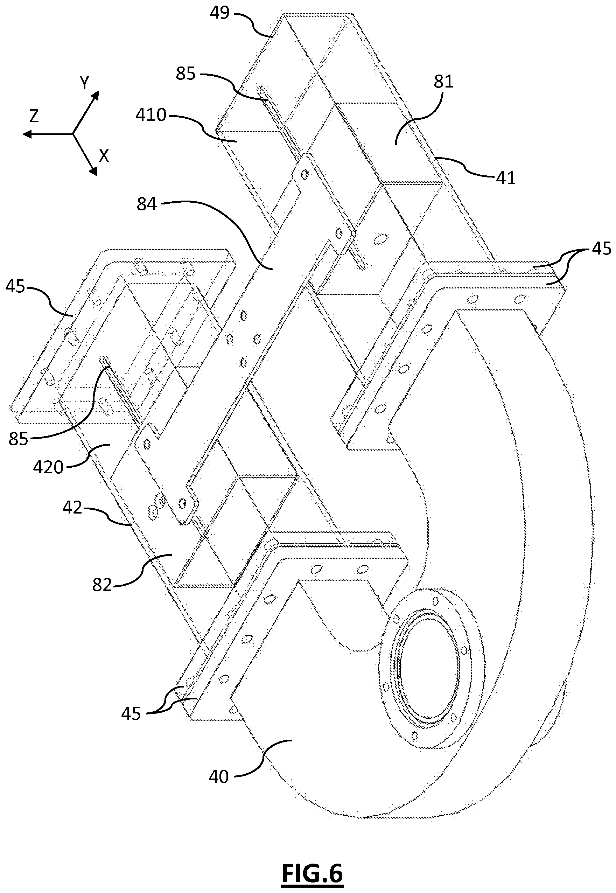

Comme illustré en figure 6, la pièce de couplage 84 est constituée d'une pièce plate allongée de faible épaisseur, présentant deux extrémité opposées, respectivement 841 et 842, en appui chacune contre une paroi 410, 420 du respectivement premier 41 et deuxième 42 tronçons rectilignes.

La première extrémité 841 de la pièce de couplage 84 est fixée sur le piston de court-circuit 81 par des moyens de fixation non illustrés, comme par exemple du type ensemble vis/boulon ou rivets, qui traversent une fente 85 ménagée à cet effet dans ladite paroi 410 du premier tronçon rectiligne 41. Cette fente 85, de forme oblongue, s'étend parallèlement à la direction X correspondant à la direction de propagation des ondes dans ce premier tronçon rectiligne 41.

La deuxième extrémité 842 de la pièce de couplage 84 est fixée sur l'iris de couplage variable 82 par d'autres moyens de fixation qui traversent une fente 85 ménagée à cet effet dans ladite paroi 420 du deuxième tronçon rectiligne 42. Cette fente 85, également de forme oblongue, s'étend parallèlement à la direction X correspondant à la direction de propagation des ondes dans ce deuxième tronçon rectiligne 41. La fente 85 est de longueur prédéterminée afin de limiter le déplacement des organes mobiles d'adaptation 81, 82 entre deux bornes correspondant aux extrémités des fentes 85.

La pièce de couplage 84 comprend une partie centrale 840, entre les deux extrémités 841, 842, qui est reliée directement à un unique moteur 83 qui déplace ladite pièce 84 en translation selon la direction X.

Comme illustré en figure 3, l'appareil de traitement selon l'invention peut comprendre un compartiment 9 avec une paroi de séparation 92 qui sépare le générateur 1 du réacteur 2 ; cette paroi 92 s'étend dans un plan (YZ) perpendiculaire aux deux plans P1 et P2 susmentionnés.

Le guide d'ondes 4 traverse la paroi de séparation 92 deux fois de sorte que :
- le tronçon recourbé 40 est disposé du côté 90 du réacteur 2, c'est-à-dire à l'extérieur du compartiment 9 ; et
- les tronçons rectilignes 41, 42, 43 sont situés du côté 91 du générateur 1, c'est-à-dire à l'intérieur du compartiment 9.

La jonction entre le tronçon recourbé 40 et les tronçons rectilignes 41 et 42 s'effectue au niveau de la paroi de séparation 92, les brides 45 correspondantes se situant sensiblement dans le plan de cette paroi 92. Ainsi, les extrémités respectivement 403 et 404 du tronçon recourbé 40, au niveau desquelles sont connectés respectivement le premier 41 et le deuxième 42 tronçons rectilignes, sont situées dans le plan de la paroi 92.

En référence à la figure 3, le compartiment 9 comporte une base 93 posée sur le sol et la paroi de séparation 92 constitue une paroi latérale dudit compartiment 9 interposé entre le réacteur 2 et le générateur 1. Le réacteur 2, de forme tubulaire selon la direction verticale Z, s'étend au moins partiellement à côté du générateur 1. Une telle disposition, permise notamment par la forme adaptée du guide d'ondes 4, permet un encombrement au sol réduit car le générateur 1 et le réacteur 2 se positionnent côté à côte.

En outre, le compartiment 9 peut comporter des rails 94 fixés sur la base 93 et destinés à maintenir surélevé une partie des composants de l'appareil, comme le générateur 1.

Le compartiment 9 comporte une paroi supérieure 95 sur laquelle sont disposés des moyens de contrôle et/ou de commande 10 de tout ou partie des composants de l'appareil de traitement, tels que le générateur 1, les moyens d'adaptation 8 et plus particulièrement ses moyens d'entraînement 8 comme le moteur 83, et les moyens de couplage 5. Ces moyens de contrôle et/ou de commande 10 peuvent par exemple prendre la forme d'un écran de contrôle et de commande.

Le compartiment 9 peut également comporter d'autres parois latérales, non illustrées, de sorte à clore le compartiment de façon étanche vis-à-vis de l'extérieur. Le compartiment 9 pourra ainsi être inerté par remplissage d'un gaz neutre, comme par exemple de l'argon, du dioxyde de carbone ou de l'azote, et isolé de façon étanche. En outre, une partie du guide d'ondes 4 pourrait également être inertée par remplissage d'un gaz neutre, des fenêtres d'isolation (non illustrées) pouvant être placé à l'intérieur du guide d'ondes 4, par exemple au niveau de chacune des extrémités 403 et 404 du tronçon recourbé 40 ; lesdites fenêtres étant constituées d'un matériau isolant et transparent aux ondes, comme par exemple le quartz.

En outre, le compartiment 9 pourra être muni d'un blindage supplémentaire, en particulier sur sa paroi de séparation 92, afin de protéger les personnes et instruments extérieurs de tout risque d'explosion du générateur et/ou d'incendie vis-à-vis d'un feu se produisant à l'intérieur dudit compartiment 9. Un tel blindage sera particulièrement adapté pour éviter que des étincelles se produisant au niveau du générateur ne risquent d'être transmises au niveau du réacteur 2 et des produits qu'il peut contenir.

Avec un appareil conforme à l'invention, un utilisateur de l'appareil plus particulièrement intéressé par le réacteur 2 que par le système de génération et de transmission de l'énergie électromagnétique, comme par exemple un analyste en chimie, n'a devant lui qu'un compartiment clos (au moins partiellement) 5 duquel dépasse le réacteur 2 et l'écran de contrôle et de commande 10. Les opérations d'analyse sont donc facilitées pour cet utilisateur, qui n'a pas ou peu à prendre de précautions particulières avec les produits chimiques, et qui peut plus facilement remplacer ou travailler sur le réacteur 2 sans risque d'endommagement de la ligne de génération et de transmission de l'énergie électromagnétique.

On remarque que l'appareil de traitement selon l'invention présente un encombrement optimisé et équilibré dans les directions longitudinale X, transversale Y et verticale Z. La dimension longitudinale de l'appareil est ainsi réduite par rapport à ceux qui sont disposés principalement en ligne.

Concernant les moyens de couplage 5, ils comprennent un dispositif d'application 7 de l'énergie au milieu réactif, couramment appelé applicateur d'énergie, dont le choix dépend du rayonnement utilisé (hautes-fréquences et micro-ondes), des caractéristiques dimensionnelles du milieu à traiter et de son mode de traitement.

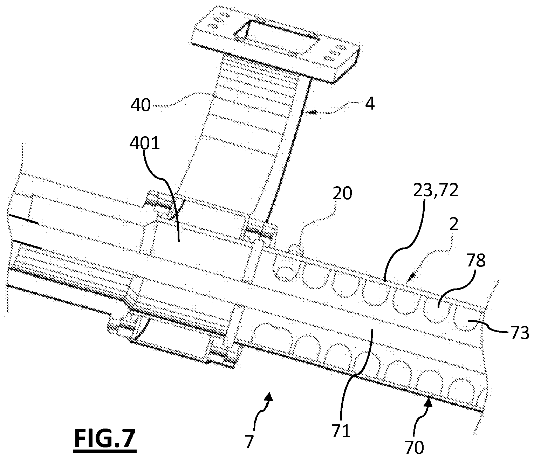

Comme illustré en figure 7, le dispositif d'application 7 comprend un applicateur 70 du type à champ proche qui s'étend au moins en partie à l'intérieur du réacteur 2, le réacteur 2 formant ainsi une cavité de résonnance à l'intérieur de laquelle le rayonnement électromagnétique est introduit par l'applicateur 70 à champ proche.

Cet applicateur à champ proche est réalisé sous la forme d'au moins une ligne de transmission à pertes 70 présentant une interface de transfert de l'énergie électromagnétique vers le milieu réactif. La demande de brevet français n° FR 08/01541 décrit une ligne de transmission à pertes de ce type, et l'on pourra utilement s'y référer pour de plus amples détails concernant la ligne de transmission à pertes.

La ligne de transmission à pertes 70 comprend au moins un premier 71 et un deuxième 72 conducteurs électriques isolés au moins partiellement l'un de l'autre au moyen d'un isolant 73 présentant des caractéristiques diélectriques adaptées, le premier conducteur 71 étant destiné à être couplé d'une part au générateur 1 et d'autre part au milieu réactif afin de permettre l'application de l'énergie électromagnétique générée audit milieu réactif. Le deuxième conducteur 72 forme ici une paroi externe 23 du réacteur 2 à l'intérieur duquel est disposé ledit milieu réactif, qui peut par exemple circuler dans un canal de circulation 78 délimité par une rainure ménagée dans un corps creux en matériau transparent aux ondes, et l'isolant diélectrique 73 est composé au moins en partie du milieu réactif.

La ligne de transmission à pertes 70 est couplée avec le guide d'ondes 4. Pour cela, le guide d'ondes 4 comporte un tronçon de couplage qui est ici le tronçon recourbé 40; ledit tronçon recourbé 40 de couplage s'étendant normalement à la ligne de transmission à pertes 70. Le tronçon recourbé 40 du guide d'ondes 4 délimite intérieurement une cavité de couplage 401 à l'intérieur de laquelle s'étend le premier conducteur 71 de la ligne de transmission à pertes 70 ; ledit premier conducteur 71 étant dénudé dans ladite cavité de couplage 401, c'est-à-dire sans être entouré d'un isolant. Ainsi, le premier conducteur 71 est couplé au guide d'ondes 4 au niveau de cette cavité de couplage 401 dans laquelle ledit premier conducteur 71 reçoit le rayonnement électromagnétique véhiculé par le guide d'ondes 4.

Bien entendu l'exemple de mise en oeuvre évoqué ci-dessus ne présente aucun caractère limitatif et d'autres détails et améliorations peuvent être apportés à l'appareil selon l'invention, sans pour autant sortir du cadre de l'invention où d'autres formes de guide d'ondes peuvent être réalisées.

Par exemple, le tronçon recourbé peut prendre la forme d'un tronçon central rectiligne sur lequel est couplé le réacteur, qui est muni à chacune de ses extrémités d'un tronçon courbé à angle droit, avantageusement en forme d'arc de cercle, comme le tronçon courbé à angle droit 730 décrit ci-dessus. Les deux tronçons courbés à angle droit sont orientés selon la même direction et le même sens afin que le tronçon recourbé, formé de l'association du tronçon rectiligne et des deux tronçons courbés à angle droit, ait une forme générale de « U ».

## Revendications

1. Appareil de traitement par rayonnement électromagnétique d'un milieu réactif comprenant un générateur (1) de rayonnement électromagnétique, un réacteur (2) contenant ledit milieu réactif, et un dispositif de transmission (3) du rayonnement électromagnétique généré par le générateur (1) au milieu réactif contenu dans ledit réacteur (2), ledit dispositif (3) comprenant un guide d'ondes (4) destiné à transmettre le rayonnement électromagnétique du générateur (1) et des moyens de couplage (5) agencés pour permettre le transfert dans le milieu réactif de l'énergie électromagnétique transmise par le guide d'ondes (4), où le guide d'ondes (4) présente une configuration en boucle de retour, **caractérisé en ce que** le guide d'ondes (4) comporte un tronçon recourbé (40) en forme générale de « U » et formant une boucle de retour dudit guide d'ondes (4), et le guide d'ondes (4) comporte un premier (41) et un deuxième (42) tronçons rectilignes en regard l'un de l'autre et respectivement connectés à une première (403) et à une deuxième (404) extrémités dudit tronçon recourbé (40), et **en ce qu'**il comprend une paroi de séparation (92) permettant d'isoler le générateur (1) du réacteur (2), ledit réacteur (2) étant couplé au tronçon recourbé (40) du guide d'ondes (4) et ledit tronçon recourbé (40) s'étendant au moins partiellement d'un côté (90) de la paroi de séparation (92) opposé audit générateur (1), où le guide d'ondes (4) traverse la paroi de séparation (92) deux fois de sorte que le tronçon recourbé (40) est disposé du côté (90) du réacteur (2) opposé audit générateur (1) et les tronçons rectilignes (41, 42) sont situés du côté (91) du générateur (1) opposé audit réacteur (2).

2. Appareil selon la revendication 1, **caractérisé en ce que** les moyens de couplage (5) comprennent un dispositif d'application (7) de l'énergie au milieu réactif.

3. Appareil selon la revendication 2, **caractérisé en ce que** le dispositif d'application (7) est un applicateur (70) du type à champ proche qui s'étend au moins en partie à l'intérieur du réacteur (2), ledit réacteur (2) formant une cavité de résonnance à l'intérieur de laquelle le rayonnement électromagnétique est introduit par l'applicateur (70).

4. Appareil selon la revendication 3, **caractérisé en ce que** l'applicateur comprend au moins une ligne de transmissions à pertes (70) présentant une interface de transfert de l'énergie électromagnétique vers le milieu réactif.

5. Appareil selon l'une quelconque des revendications 1 à 4, **caractérisé en ce que** les premier (41) et deuxième (42) tronçons rectilignes sont sensiblement parallèles ou inclinées l'un par rapport à l'autre.

6. Appareil selon l'une quelconque des revendications précédentes, **caractérisé en ce qu'**il comprend des moyens d'adaptation (8) conçus pour assurer l'adaptation du rayonnement électromagnétique audit milieu réactif, lesdits moyens d'adaptation (8) comprenant deux organes mobiles d'adaptation (81, 82) disposés dans le guide d'onde (4) de part et d'autre dudit tronçon recourbé (40).

7. Appareil selon la revendication 6, **caractérisé en ce qu'**un premier organe mobile d'adaptation (81), tel qu'un piston de court-circuit, est mobile en translation dans le premier tronçon rectiligne (41), et **en ce qu'**un deuxième organe mobile d'adaptation (82), tel qu'un iris de couplage variable, est mobile en translation dans le deuxième tronçon rectiligne (42).

8. Appareil selon la revendication 7, **caractérisé en ce que** les moyens d'adaptation (8) comportent des moyens d'entraînement (80) en translation des deux organes mobiles d'adaptation (81, 82), lesdits moyens d'entraînement (80) étant couplés directement aux deux organes mobile d'adaptation (81, 82) afin de les faire translater dans le guide d'ondes (4).

9. Appareil selon l'une quelconque des revendications précédentes, **caractérisé en ce que** le deuxième tronçon rectiligne (42) est connecté à un troisième tronçon rectiligne (43) incliné par rapport audit deuxième tronçon (42) et destinée à être connecté audit générateur (1), de sorte que le guide d'ondes (4) comprend successivement, en sortie du générateur (1), le troisième tronçon rectiligne (43), le deuxième tronçon rectiligne (42), le tronçon recourbé (40) et le premier tronçon rectiligne (41).

10. Appareil selon la revendication 9, **caractérisé en ce que** les deuxième (42) et troisième (43) tronçons rectilignes s'étendent dans un premier plan (P1), et **en ce que** le tronçon recourbé (40) et le premier tronçon rectiligne (41) s'étendent dans un deuxième plan (P2) incliné par rapport audit premier plan (P1) selon un angle non nul, notamment un angle de sensiblement 90°.

11. Appareil selon l'une quelconque des revendications précédentes en combinaison avec la revendication 6, **caractérisé en ce que** les deux organes mobiles d'adaptation (81, 82) sont disposés d'un côté (91) de la paroi de séparation (92) opposé audit réacteur (2), les premier (41) et deuxième (42) tronçons rectilignes s'étendant au moins partiellement de ce côté (91) de la paroi de séparation (92).

12. Appareil selon l'une quelconque des revendications précédentes en combinaison avec la revendication 8, **caractérisé en ce que** les moyens d'entraînement (80) en translation des deux organes mobiles d'adaptation (81, 82) sont disposés du côté (91) de la paroi de séparation (92) opposé audit réacteur (2).

13. Appareil selon l'une quelconque des revendications précédentes, **caractérisé en ce qu'**il comprend un compartiment (9) à l'intérieur duquel est au moins disposé ledit générateur (1), ledit compartiment (9) comportant ladite paroi de séparation (92).

14. Appareil selon la revendication 13, **caractérisé en ce que** le compartiment (9) est inerté par remplissage d'un gaz neutre, comme par exemple de l'argon, du dioxyde de carbone ou de l'azote.

15. Appareil selon l'une quelconque des revendications 13 ou 14, **caractérisé en ce que** le compartiment (9) comprend un blindage, notamment sur la paroi de séparation (92), conçu pour protéger les personnes et/ou instruments extérieurs audit compartiment (9) de tout risque d'explosion et/ou d'incendie se produisant à l'intérieur dudit compartiment (9).

## Patentansprüche

1. Vorrichtung zur Behandlung eines reaktiven Mediums durch elektromagnetische Strahlung, umfassend einen Generator (1) von elektromagnetischer Strahlung, einen Reaktor (2), der das reaktive Medium enthält, und eine Anlage zur Übertragung (3) der elektromagnetischen Strahlung, generiert durch den Generator (1), an das reaktive Medium, das in dem Reaktor (2) enthalten ist, wobei die Anlage (3) einen Wellenleiter (4) umfasst, der ausgelegt ist, um die elektromagnetische Strahlung des Generators (1) zu übertragen, und Kopplungsmittel (5), die angebracht sind, um den Transfer im reaktiven Medium der elektromagnetischen Energie, übertragen durch den Wellenleiter (4) zu ermöglichen, wo der Wellenleiter (4) eine Konfiguration in Rückkoppelungsschleife darstellt, **dadurch gekennzeichnet, dass** der Wellenleiter (4) einen gekrümmten Abschnitt (40) in der allgemeinen Form eines "U" umfasst und eine Rückkoppelungsschleife des Wellenleiters (4) bildet, und der Wellenleiter (4) einen ersten (41) und einen zweiten (42) geradlinigen Abschnitt einander gegenüber liegend und jeweils mit einem ersten (403) und einem zweiten (404) Ende des gekrümmten Abschnitts (40) verbunden, umfasst, und dadurch, dass er eine Trennwand (92) umfasst, die ermöglicht, den Generator (1) vom Reaktor (2) zu isolieren, wobei der Reaktor (2) mit dem gekrümmten Abschnitt (40) des Wellenleiters (4) gekoppelt ist und wobei sich der gekrümmte Abschnitt (40) mindestens teilweise von einer Seite (90) der Trennwand (92) gegenüber dem Generator (1) erstreckt, wo der Wellenleiter (4) die Trennwand (92) zweimal durchquert, so dass der gekrümmte Abschnitt (40) auf der Seite (90) des Reaktors (2) gegenüber dem Generator (1) angeordnet ist und sich die geradlinigen Abschnitte (41, 42) an der Seite (91) des Generators (1) gegenüber dem Reaktor (2) befinden.

2. Vorrichtung nach Anspruch 1, **dadurch gekennzeichnet, dass** die Kopplungsmittel (5) eine Anlage zur Anwendung (7) der Energie auf das reaktive Medium umfassen.

3. Vorrichtung nach Anspruch 2, **dadurch gekennzeichnet, dass** die Anlage zur Anwendung (7) eine Anwendungsvorrichtung (70) vom Typ Nahfeld ist, die sich mindestens teilweise im Inneren des Reaktors (2) erstreckt, wobei der Reaktor (2) einen Resonanzhohlraum bildet, in dessen Inneres die elektromagnetische Strahlung durch die Anwendungsvorrichtung (70) eingeführt wird.

4. Vorrichtung nach Anspruch 3, **dadurch gekennzeichnet, dass** die Anwendungsvorrichtung mindestens eine Verlustübertragungslinie (70) umfasst, die eine Transferschnittstelle der elektromagnetischen Energie hin zur reaktiven Umgebung darstellt.

5. Vorrichtung nach einem der Ansprüche 1 bis 4, **dadurch gekennzeichnet, dass** der erste (41) und zweite (42) geradlinige Abschnitt im Wesentlichen parallel oder geneigt mit Bezug aufeinander sind.

6. Vorrichtung nach einem der vorhergehenden Ansprüche, **dadurch gekennzeichnet, dass** sie Anpassungsmittel (8) umfasst, die entworfen sind, um die Anpassung der elektromagnetischen Strahlung an das reaktive Medium sicherzustellen, wobei die Anpassungsmittel (8) zwei bewegliche Anpassungsorgane (81, 82) umfassen, die im Wellenleiter (4) auf beiden Seiten des gekrümmten Abschnitts (40) angeordnet sind.

7. Vorrichtung nach Anspruch 6, **dadurch gekennzeichnet, dass** ein erstes bewegliches Anpassungsorgan (81), wie z. B. ein Kurzschlusskolben, im ersten geradlinigen Abschnitt (41) translatorisch beweglich ist, und dadurch, dass das zweite bewegliche Anpassungsorgan (82), wie z. B. eine Iris mit variabler Kopplung, im zweiten geradlinigen Abschnitt (42) translatorisch beweglich ist,

8. Vorrichtung nach Anspruch 7, **dadurch gekennzeichnet, dass** die Anpassungsmittel (8) Mittel zum translatorischen (80) Bewegen der zwei beweglichen Anpassungsorgane (81, 82) umfassen, wobei die Mittel zum Bewegen (80) direkt mit den zwei beweglichen Anpassungsorganen (81, 82) gekoppelt sind, um sie in den Wellenleiter (4) zu übertragen.

9. Vorrichtung nach einem der vorhergehenden Ansprüche, **dadurch gekennzeichnet, dass** der zweite geradlinige Abschnitt (42) mit einem dritten geradlinigen Abschnitt (43) verbunden ist, der mit Bezug auf den zweiten Abschnitt (42) geneigt und ausgelegt ist, um mit dem Generator (1) verbunden zu sein, so dass der Wellenleiter (4) aufeinander folgend, am Ausgang des Generators (1), den dritten geradlinigen Abschnitt (43), den zweiten geradlinigen Abschnitt (42), den gekrümmten Abschnitt (40) und den ersten geradlinigen Abschnitt (41) umfasst.

10. Vorrichtung nach Anspruch 9, **dadurch gekennzeichnet, dass** der zweite (42) und dritte (43) geradlinige Abschnitt sich in einer ersten Ebene (P1) erstrecken, und dadurch, dass sich der gekrümmte Abschnitt (40) und der erste geradlinige Abschnitt (41) in einer zweiten Ebene (P2) erstrecken, die mit Bezug auf die erste Ebene (P1) gemäß einem Winkel von nicht null, insbesondere einem Winkel von im Wesentlichen 90°, geneigt ist.

11. Vorrichtung nach einem der vorhergehenden Ansprüche in Kombination mit Anspruch 6, **dadurch gekennzeichnet, dass** die zwei beweglichen Anpassungsorgane (81, 82) an einer Seite (91) der Trennwand (92) gegenüber dem Reaktor (2) angeordnet sind, wobei sich der erste (41) und zweite (42) geradlinige Abschnitt mindestens teilweise auf dieser Seite (91) der Trennwand (92) erstrecken.

12. Vorrichtung nach einem der vorhergehenden Ansprüche in Kombination mit Anspruch 8, **dadurch gekennzeichnet, dass** die Mittel zum translatorischen Bewegen (80) der zwei beweglichen Anpassungsorgane (81, 82) an der Seite (91) der Trennwand (92) gegenüber dem Reaktor (2) angeordnet sind,

13. Vorrichtung nach einem der vorhergehenden Ansprüche, **dadurch gekennzeichnet, dass** sie ein Abteil (9) umfasst, in dessen Inneren mindestens der Generator (1) angeordnet ist, wobei das Abteil (9) die Trennwand (92) umfasst.

14. Vorrichtung nach Anspruch 13, **dadurch gekennzeichnet, dass** das Abteil (9) inert ist durch Füllung mit einem neutralen Gas, wie z. B. Argon, Kohlendioxid oder Stickstoff.

15. Vorrichtung nach einem der Ansprüche 13 oder 14, **dadurch gekennzeichnet, dass** das Abteil (9) eine Abschirmung umfasst, insbesondere auf der Trennwand (92), die entworfen ist, um die Personen und/oder Instrumente außerhalb des Abteils (9) vor jedem Risiko einer Explosion und/oder eines Feuers zu schützen, die sich im Inneren des Abteils (9) ereignen.

## Claims

1. A device for treating a reactive medium with electromagnetic radiation comprising an electromagnetic radiation generator (1), a reactor (2) containing said reactive medium, and a device (3) for transmitting the electromagnetic radiation generated by the generator (1) to the reactive medium contained in said reactor (2), said device (3) comprising a wave guide (4) intended for transmitting the electromagnetic radiation of the generator (1) and coupling means (5) arranged so as to allow transfer into the reactive medium of the electromagnetic energy transmitted by the wave guide (4), wherein said wave guide (4) has a return loop configuration, **characterized in that** the wave guide (4) includes a curved segment (40) in a general "U" shape and forming a return loop from said wave guide (4), and the wave guide (4) includes a first (41) and a second (42) rectilinear segments facing each other and respectively connected to a first (403) and a second (404) ends of said curved segment (40), and **in that** it comprises a separation wall (92) allowing isolation of the generator (1) from the reactor (2), said reactor (2) being coupled with the curved segment (40) of the wave guide (4) and said curved segment (40) at least partly extending on one side (90) of the separation wall (92) opposite to said generator (1), wherein the wave guide (4) crosses the separation wall (92) twice so that the curved segment (40) is positioned on the side (90) of the reactor (2) opposite to the generator (1) and the rectilinear segments (41, 42) are located on the side (91) of the generator (1) opposite to the reactor (2).

2. The device according to claim 1, **characterized in that** the coupling means (5) comprise an application device (7) for applying the energy to the reactive medium.

3. The device according to claim 2, **characterized in that** the application device (7) is an applicator (70) of the near field type which at least partly extends into the interior of the reactor (2), said reactor (2) forming a resonant cavity inside which the electromagnetic radiation is introduced by the applicator (70).

4. The device according to claim 3, **characterized in that** the applicator comprises at least one lossy transmission line (70) having an interface for transfer of the electromagnetic energy towards the reactive medium.

5. The device according to any of claims 1 to 4, **characterized in that** the first (41) and second (42) rectilinear segments are substantially parallel or tilted relatively to each other.

6. The device according to any of the preceding claims, **characterized in that** it comprises adaptation means (8) designed for ensuring adaptation of the electromagnetic radiation to said reactive medium, said adaptation means (8) comprising two mobile adaptation members (81, 82) positioned in the wave guide (4) on either side of said curved segment (40).

7. The device according to claim 6, **characterized in that** a first mobile adaptation member (81), such as a short-circuit piston, is translationally mobile in the first rectilinear segment (41), and **in that** a second mobile adaptation member (82), such as a variable coupling iris, is translationally mobile in the second rectilinear segment (42).

8. The device according to claim 7, **characterized in that** the adaptation means (8) include means (80) for driving into translation both mobile adaptation members (81, 82), said driving means (80) being directly coupled with both mobile adaptation members (81, 82) in order to translate them in the wave guide (4).

9. The device according to any of the preceding claims, **characterized in that** the second rectilinear segment (42) is connected to a third rectilinear segment (43) tilted relatively to said second segment (42) and intended to be connected to said generator (1), so that the wave guide (4) successively comprises, at the output of the generator (1), the third rectilinear segment (43), the second rectilinear segment (42), the curved segment (40) and the first rectilinear segment (41).

10. The device according to claim 9, **characterized in that** the second (42) and the third (43) rectilinear segments extend in a first plane (P1), and **in that** the curved segment (40) and the first rectilinear part (41) extend in a second plane (P2) tilted relatively to said first plane (P1) by a non-zero angle, notably by an angle of substantially 90°.

11. The device according to any of the preceding claims in combination with claim 6, **characterized in that** both mobile adaptation members (81, 82) are positioned on one side (91) of the separation wall (92) opposite to said reactor (2), the first (41) and the second (42) rectilinear segments at least partly extending on this side (91) of the separation wall (92).

12. The device according to any of the preceding claims in combination with claim 8, **characterized in that** the means (80) for driving into translation both mobile adaptation members (81, 82) are positioned on the side (91) of the separation wall (92) opposite to said reactor (2).

13. The device according to any of the preceding claims, **characterized in that** it comprises a compartment (9) inside which said generator (1) is at least positioned, said compartment (9) including said separation wall (92).

14. The device according to claim 13, **characterized in that** the compartment (9) is inertized by filling it with a neutral gas, such as for example argon, carbon dioxide or nitrogen.

15. The device according to claims 13 or 14, **characterized in that** the compartment (9) comprises shielding, notably on the separation wall (92), designed for protecting persons and/or instruments external to said compartment (9) against any risk of explosion and/or fire occurring inside said compartment (9).
